# EUROPÄISCHE PATENTSCHRIFT

(11) **EP 0 322 427 B1**
(45) Veröffentlichungstag und Bekanntmachung des Hinweises auf die Patenterteilung: **20.10.1993**
(21) Anmeldenummer: 88905173.6
(22) Anmeldetag: 21.06.1988
(51) Int. Cl.: A23L 2/30, C12H 1/02

(54) **VERFAHREN ZUR NACHBEHANDLUNG VON FLÜSSIGKEITEN, INSBESONDERE GEKLÄRTEM SAFT, UND ANLAGE ZUR DURCHFÜHRUNG DES VERFAHRENS**
PROCESS AND INSTALLATION FOR SUBSEQUENT TREATMENT OF LIQUIDS, IN PARTICULAR CLARIFIED JUICE
PROCEDE ET INSTALLATION DE TRAITEMENT ULTERIEUR DE LIQUIDES, NOTAMMENT DU JUS CLARIFIE

(30) Priorität: 29.06.1987 CH 2452/87
(43) Veröffentlichungstag der Anmeldung: 05.07.1989
(73) Patentinhaber: BUCHER-GUYER AG Maschinenfabrik, CH-8166 Niederweningen/Zürich (CH)
(72) Erfinder: GRESCH, Walter, CH-8166 Niederweningen (CH)
(86) Internationale Anmeldenummer: CH8800111
(87) Internationale Veröffentlichungsnummer: WO8900013

(56) Entgegenhaltungen:
- WO-A-88/01139
- DE-A- 1 792 269
- DE-A-15 178 74
- GB-A-21 630 62
- Food Technology, vol. 83, No. 12, December 1984, (Chicago, US), D.J. Paulson et al.:"Crossflow membrane technology and its applications"

## Beschreibung

Die Erfindung betrifft ein Verfahren zur Nachbehandlung von wenigstens teilweise geklärten Flüssigkeiten, insbesondere geklärter Säfte aus Früchten, Beeren oder Gemüsen, mit je einem Behandlungsmittel zur Verhinderung von Nachtrübung und/oder zur Farbaufhellung, wobei der Saft in Kontakt mit dem Behandlungsmittel gebracht und das Behandlungsmittel durch einen Filter zurückgehalten wird.

In manchen Fällen tritt nach dem Klären von Saft, insbesondere beim Klären mittels Ultra- oder Mikrofiltration, nach einer gewissen Lagerzeit und unter bestimmten Umständen, beispielsweise nach dem Konzentrieren, eine nachträgliche Trübung des Saftes ein. Um dies zu verhindern, hat sich in der Praxis die Behandlung des Saftes mit einem Behandlungsmittel, dem sogenannten PVPP (Polyvinylpolypyrrolidon), das selektiv Nachtrübung verursachende Polyphenole zu binden vermag, besonders gut bewährt. PVPP ist ein feines Pulver, das mit einer Konzentration von beispielsweise 10-100 gr/HL dem nachzubehandelnden Saft zugegeben und nach einer Aufenthaltszeit von z.B. ca. 5 Minuten wieder aus dem Saft herausgefiltert wird, der danach trubstabil ist. Da PVPP relativ teuer ist, werden vorwiegend Anlagen verwendet, bei denen das PVPP wieder zurückgewonnen werden kann. Die gleiche Behandlung wird auch angewendet, wenn eine Aufhellung des Saftes gewünscht wird.

Ein bekanntes Verfahren zur Nachbehandlung von geklärtem Saft besteht darin, dass dem Klarsaft, der von einer Ultra, Mikro- oder konventionellen Filtrationsanlage geliefert wird, das Behandlungsmittel PVPP beigegeben wird und das Gemisch aus Klarsaft und PVPP ein Anschwemmfilter durchläuft. Mit Hilfe einer Dosiereinrichtung wird die Konzentration von PVPP im Saft eingestellt. Innerhalb des Anschwemmfilters wird das suspendierte PVPP durch die Filterflächen zurückgehalten, so dass der austretende Saft frei von PVPP ist. Eine nochmalige Filtration des Saftes erfolgt durch einen weiteren Filter, der aus Sicherheitsgründen dem Anschwemmfilter nachgeschaltet ist und sicherstellt, dass im Saft kein PVPP mehr enthalten ist. Mit zunehmender Zeit wird der aus PVPP bestehende Filterkuchen auf dem Anschwemmfilter immer dicker. Die Durchsatzleistung wird entsprechend geringer, bis die Anlage abgestellt werden muss. Nach dem Abstellen der Saftzufuhr wird das angeschwemmte PVPP bzw. der Filterkuchen mit sog. Waschwasser und Lauge durchströmt. Durch die Lauge wird das relativ teure PVPP regeneriert und kann durch Ablösen des Filterkuchens und Einbringen in die Dosiereinrichtung wieder verwendet werden.

Die suspendierte Form von pulverförmigen Behandlungsmitteln, wie z.B. PVPP, Aktivkohle oder Schönungsmittel wie Bentonite etc. im Saft, bietet ideale Voraussetzungen für einen guten Stoffaustausch zwischen Saft und Behandlungsmittel zum Entfernen unerwünschter Stoffe aus dem Saft, beispielsweise durch Adsorption an das Behandlungsmittel, sowie für die Prozessführung.

Das bekannte Verfahren der Anschwemmfiltration hat aber den Nachteil, dass das suspendierte Behandlungsmittel durch die statische Filtration relativ rasch an den Filterflächen angeschwemmt wird und eine Anschwemmschicht bildet. Die Folge davon ist eine geringere Wirksamkeit des PVPP, das nun in Form eines sogenannten Festbettes vorliegt, das relativ dünn ist und rasch durchströmt wird. Die für die Trübung des Saftes verantwortlichen Stoffe werden dadurch bei den z.T. gesetzlich zugelassenen Konzentrationen für z.B. PVPP oftmals nicht in ausreichendem Masse abgebaut. Ausserdem bewirkt die zunehmende Filterschicht eine entsprechend zunehmende Reduzierung der Durchsatzleistung. Ein weiterer Nachteil besteht darin, dass sich nur solche Behandlungsmittel einsetzen lassen, die aufgrund ihrer Struktur eine relativ gut durchlässige Anschwemm-Filterschicht erzeugen und dadurch eine wirtschaftliche Durchsatzleistung gewährleisten. Dies wird mit einem speziellen PVPP-Mittel erreicht, das aber wesentlich teurer ist, als das an und für sich schon teure, normale PVPP. Dadurch fallen auch erhöhte Betriebskosten an, da der Verlust an Behandlungsmittel bei der Regenerierung bis ca. 1-2 % beträgt. Ferner ist von Nachteil, dass der Prozess unabhängig von der Durchsatzleistung unterbrochen werden muss, sobald die Filterschicht eine bestimmte Grösse erreicht hat, die gegeben ist durch die Abstände zwischen den Filterelementen. Dieser Zustand wird umso schneller erreicht, je höher die Konzentration der Suspension ist. Ausserdem erfordert die Regenerierung des PVPP relativ viele Operationen. Bei ungeschultem Bedienungspersonal kann deshalb eine aufwendige Automation der Arbeitsvorgänge erforderlich werden. Mit dem Anschwemmfiltrationsverfahren lässt sich auch keine Nachbehandlung mit löslichen Behandlungsmitteln, z.B. mit Enzymen, durchführen.

Bei einer weiteren, bekannten Ausführung zur Nachbehandlung von Saft werden PVPP-haltige Schichten in einen sogenannten Schichtenfilter eingebaut. Diese Schichten werden vom Saft durchströmt, der auf diese Weise mit PVPP behandelt wird. Die Kontaktzeit des Saftes mit dem Behandlungsmittel ist dabei kurz. Es werden deshalb relativ grosse Apparate und ein häufiges Regenerieren des Behandlungsmittels erforderlich. Ferner ist nur ein Einsatz von regenerierten Vorbehandlungsmitteln mit Rücksicht auf den Aufwand zweckmässig. Lösliche Nachbehandlungsmittel sind ebenfalls nicht einsetzbar.

Der Erfindung liegt die Aufgabe zugrunde, ein Verfahren und eine Anlage zur Nachbehandlung von geklärtem Saft zu schaffen, durch das bei verringerten Investitionskosten die Durchsatzleistung und Wirtschaftlichkeit der Anlage erhöht und die Qualität der Behandlung verbessert werden. Diese Aufgabe wird gemäss der Erfindung dadurch gelöst, dass das Gemisch aus Saft und Behandlungsmittel im Querstromfiltrationsverfahren gefiltert wird.

Weitere vorteilhafte und zweckmässige Ausgestaltungen der Erfindung sind den Patentansprüchen zu entnehmen.

Die mit der Erfindung erzielten Vorteile bestehen insbesondere darin, dass durch die Querstromfiltration aufgrund einer dynamischen Filtration der Aufbau einer die Durchsatzleistung und die Wirkung des Behandlungsmittels vermindernden Anschwemmschicht an den Filterflächen verhindert wird. Dadurch wird die Wirtschaftlichkeit der Anlage erhöht. Die Anlage arbeitet bei entsprechender Filterwahl praktisch verlustfrei, solange eine Regenerierung des Behandlungsmittels möglich ist. Die Wirksamkeit des Behandlungsmittels kann durch unterschiedliche und steuerbare Verweilzeiten im Saft ausgeglichen werden. Mit Hilfe der Querstromfiltration ist für die Regenerierung des Behandlungsmittels eine einfache Aufkonzentrierung der Behandlungsmittel-Suspension oder Lösung möglich, durch die trotz der suspendierten oder gelösten Form des Behandlungsmittels sowohl die Regenerierzeit als auch die notwendige Menge an Regenerierungsmittel im wirtschaftlich vertretbaren Rahmen gehalten werden kann. Ausserdem ist ein universeller Einsatz von verschiedenen Behandlungsmitteln möglich. Neben PVPP lassen sich auch andere pulverförmige Behandlungsmittel wie z.B. Bentonit, Aktivkohle etc.,, einsetzen.

Die Erfindung ist in der folgenden Beschreibung und der Zeichnung, die verschiedene Ausführungsbeispiele darstellt, näher erläutert. Es zeigen:
Fig. 1 eine schematische Darstellung der Anlage mit Regenerierung des Behandlungsmittels innerhalb der Anlage und
Fig. 2 die Anlage nach Fig. 1 mit Regenerierung ausserhalb der Anlage.

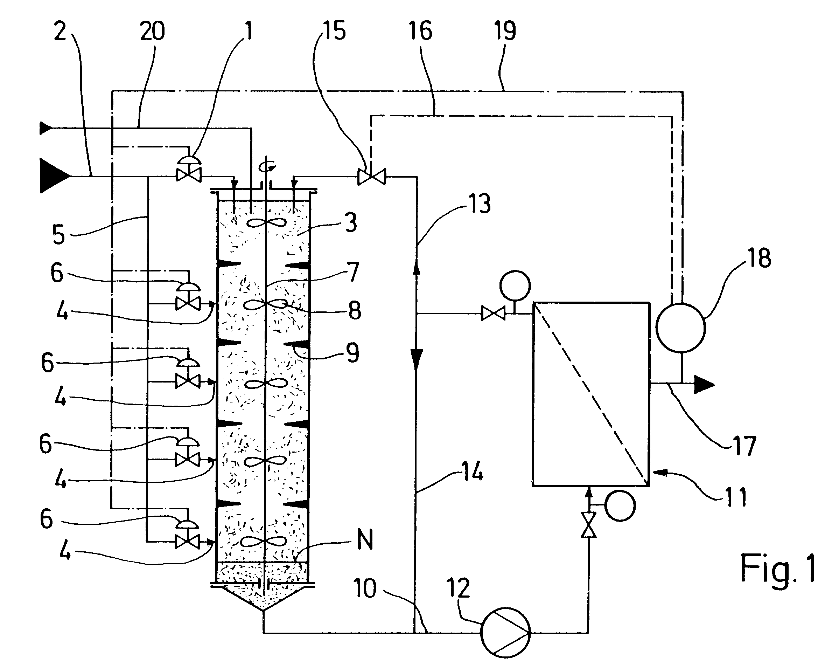

Wie aus Fig. 1 ersichtlich, wird der nachzubehandelnde Saft über eine durch ein Ventil 1 absperrbare Zuführleitung 2 in einen Vorlauftank 3 eingebracht. Der Vorlauftank 3 ist in vertikaler Richtung kolonnenförmig aufgebaut und weist mehrere Einspeisstellen 4 auf, durch die der Saft wahlweise in den Vorlauftank 3 eingeleitet werden kann. Hierzu zweigt von der Zuführleitung 2 eine Leitung 5 ab, die über Absperrventile 6 zu den verschiedenen Einspeisstellen 4 des Vorlauftanks 3 führt. Im Vorlauftank 3 ein Rührwerk 7 mit mehreren Rührpropellern 8 und Statoreinbauten 9 angeordnet.
Vom unteren Ende der Vorlauftanks 3 führt eine Leitung 10 zu einer Querstromfiltrationseinrichtung 11, die aus einer Ultra-, Mikro- oder Grobfiltrationsanlage bestehen kann. In die Leitung 10 ist eine Umwälzpumpe 12 geschaltet. Eine Rückleitung 13 führt von der Querstromfiltrationseinrichtung 11 zurück zum Vorlauftank 3. Die Leitung 10, die Querstromfiltrationseinrichtung 11, die Rückleitung 13 und der Vorlauftank 3 bilden den retentatseitigen Kreislauf. Ueber eine Verbindungsleitung 14 zwischen der Rückleitung 13 und der Leitung 10 kann ein Teil des Retentates unter Umgehung des Vorlauftanks 3 direkt in die Leitung 10 zurückgeführt werden. Die Menge des abgezweigten Retentates ist über ein Regelventil 15 steuerbar, das durch eine Steuerleitung 16 mit einem in der Abflussleitung 17 für das Permeat angeordneten Farbregler bzw. Regler für eine von der Behandlung beeinflussten Messgrösse 18 verbunden ist. Eine weitere Steuerleitung 19 führt vom Farbregler 18 zu den Absperrventilen 6 für die Steuerung der Frischsaftzufuhr in den Vorlauftank 3 zwecks Steuerung der Behandlungsdauer.

Der von einer Ultra- oder Mikrofiltrationseinrichtung gelieferte Frischsaft wird über die Zuführleitung 2 in den Vorlauftank 3 eingebracht und mit Hilfe der Umwälzpumpe 12 durch die Querstromfiltrationseinrichtung 11 hindurchgeleitet. Dabei wird der Saft mit dem Behandlungsmittel, beispielsweise PVPP, von dem zuvor eine dosierte Menge in den retentatseitigen Kreislauf gegeben wurde, in Kontakt gebracht. Die im Saft vorhandenen, die Nachtrübung verursachenden Polyphenole werden durch das PVPP gebunden, so dass der auf diese Weise nachbehandelte Saft, der an der Filterfläche der Querstromfiltrationseinrichtung vom Behandlungsmittel abgetrennt wird, trubstabil auf der Permeatseite die Querstromfiltrationseinrichtung 11 durch die Abflussleitung 17 verlässt. Das Behandlungsmittel bleibt aufgrund des Querstromfilterprinzips im retentatseitigen Kreislauf in Suspension bzw. in Lösung bei löslichen Behandlungsmitteln. Der kolonnenförmige Aufbau des Vorlauftanks 3 bewirkt, dass neuer Saft ab seinem Eintritt in den Vorlauftank erst nach einer gewissen Verweilzeit, während der das Behandlungsmittel wirken kann, zur Filtrationsfläche der Querstromfiltrationseinrichtung 11 gelangt. Durch die Rührpropeller 8 und die Statoreinbauten 9 oder z.B. durch den Einbau von Statisch-Mischelementen wird eine gute Durchmischung von Saft und Behandlungsmittel sowie ein enges Verweilzeit-Spektrum für den durchlaufenden Saft erreicht. Dadurch wird die Qualität der Behandlung verbessert und ausserdem die notwendige Konzentration an Behandlungsmittel verringert respektiv die Möglichkeit gegeben, einen kleineren Tank zu verwenden.

Die Intensität der Behandlung des Saftes mit PVPP kann durch Veränderung der Verweilzeit des Saftes in der Anlage oder durch Beeinflussung der Turbulenz im Vorlauftank 3 gegeben durch die Rührerdrehzahl und die Umlaufmenge reguliert werden. Für eine kürzere Verweilzeit wird beispielsweise zur Einleitung des Frischsaftes in den Vorlauftank 3 eine weiter unten liegende Einspeisstelle 4 durch Oeffnen des dazugehörigen Absperrventils 6 gewählt. Eine automatische Steuerung der Absperrventile 6 erfolgt durch den Regler 18. Eine weitere Möglichkeit zur Beeinflussung der Verweilzeit ist durch das Regelventil 15 gegeben, das ebenfalls mit dem Farbregler 18 verbunden ist und die Rückflussmenge des Retentates zum Vorlauftank 3 in Abhängigkeit vom Farbwert des auf der Permeatseite austretenden Saftes steuert. Die Regelung der Verweilzeit kann auch in Abhängigkeit von der Zeit der vorfiltrierten Saftmenge oder einer anderen, kennzeichnenden Messgrösse erfolgen.

Um das relativ teure Behandlungsmittel nach der Adsorption der unerwünschten Stoffe aus dem Saft wieder verwenden zu können, muss es einer Regenerierungsbehandlung mit Lauge unterzogen werden. Hierzu wird die Saftzufuhr zum Vorlauftank 3 abgestellt und durch Einleitung von Wasser in den retentatseitigen Kreislauf der restliche Saft herausgespült und das Gemisch aus Wasser und Behandlungsmittel aufkonzentriert. Dadurch ergibt sich eine Verringerung des zu regenerierenden Volumens und damit auch eine Verringerung der notwendigen Menge an Regenerierungsmittel. Ausserdem wird auch die Regenerierzeit verkürzt und somit die Wirtschaftlichkeit erhöht. Nach dem Einleiten von Lauge in das Restvolumen des retentatseitigen Kreislaufes erfolgt die Regenerierung des Behandlungsmittels durch vorzugsweises Rezirkulieren des Inhalts des Vorlauftanks 3 über die Querstromfiltrations-Anlage 11 mittels der Umwälzpumpe 12. Dabei hat der Flüssigkeitsspiegel im Vorlauftank 3 das Niveau N. Nach Beendigung des Regeneriervorganges wird die Zufuhr von Lauge abgestellt und die Anlage durch Einleitung von Spülwasser über die Zuführleitung 20 in den retentatseitigen Kreislauf durchgespült und von der Lauge befreit. Danach kann wieder Frischsaft über die Zuführleitung 2 eingeleitet und die Behandlung des Saftes mit dem regenerierten PVPP fortgesetzt werden.

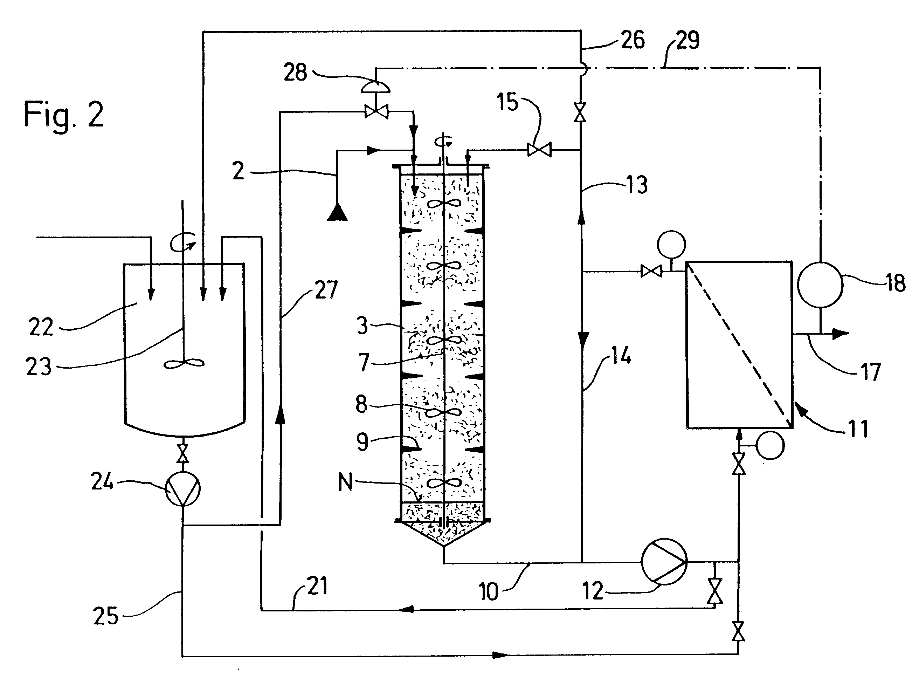

In Fig. 2 ist ein Ausführungsbeispiel dargestellt, bei der die Regenerierung des Behandlungsmittels ausserhalb der Anlage stattfindet. Diese Art der Regenerierung ist zweckmässig, wenn beispielsweise relativ hohe Chemikalien-Konzentrationen für die Regenerierung und/oder eine Beeinflussung der Behandlungsintensität auch durch eine Veränderung der Behandlungsmittelkonzentration notwendig sind. Das gleiche gilt auch für den Fall hoher Temperaturen, die für gewisse, beispielsweise aus Kunststoff bestehende Membranarten der Querstromfiltrationseinrichtung 11 schädigend sind. Um diese Nachteile zu vermeiden, wird vorzugsweise die zuvor im retentatseitigen Kreislauf aufkonzentrierte Lösung aus Wasser und Behandlungsmittel von der Umwälzpumpe 12 über eine Leitung 21 vom retentatseitigen Kreislauf in einen ausserhalb der Anlage befindlichen Regenerierungstank 22 gepumpt. Zur chemischen Behandlung und Regenerierung des PVPP wird dem Regenerierungstank 22 Lauge zugeführt und mit Hilfe eines Rührwerks 23 durchmischt. Nach einer gewissen Verweilzeit ist die Regenerierung des Behandlungsmittels abgeschlossen, so dass die im Gemisch enthaltene Lauge wieder entfernt werden kann. Hierzu wird das Gemisch nach Abkühlung und Verdünnung durch Spülwasser vom Regenerierungstank 22 vorzugsweise mit Hilfe einer Umwälzpumpe 24 über eine Leitung 25 in die Querstromfiltrationseinrichtung 11 gepumpt und auf dem Wege der Diafiltration oder ähnlichen Verfahren gewaschen, so dass die Lauge durch die Abflussleitung 17 auf der Permeatseite der Querstromfiltrationseinrichtung 11 austreten kann. Das aus Spülwasser und Behandlungsmittel bestehende Restgemisch wird über die Rückleitung 13 des retentatseitigen Kreislaufs in den Vorlauftank 3 oder über eine von der Rückleitung 13 abgezweigte weitere Leitung 26 wieder in den Regenerierungstank 22 zurückgeführt. Vom Regenerierungstank 22 aus wird das regenerierte und gewaschene Behandlungsmittel über eine Leitung 27 in den Vorlauftank 3 und damit in den retentatseitigen Kreislauf eingebracht. Gleichzeitig kann die Saftzufuhr über die Zuführleitung 2 eingeleitet werden, so dass ein neuer Prozess für die Nachbehandlung des Saftes stattfinden kann.

Die im Ausführungsbeispiel nach Fig. 1 bereits beschriebene Regulierung der Behandlungsdauer des Saftes kann im Ausführungsbeispiel nach Fig. 2 dadurch ergänzt werden, dass gleichzeitig mit der Frischsaftzufuhr eine allmähliche oder geregelte Zugabe von regeneriertem Behandlungsmittel vom Regenerierungstank 22 über die Leitung 27 in den Vorlauftank 3 erfolgt. In der Leitung 27 ist ein Regulierventil 28 angeordnet, das über eine Leitung 29 vom Regler 18 steuerbar ist.

Bei Einsatz von billigen Behandlungsmitteln oder bei Anwendung in sehr geringer Konzentration kann auch eventuell auf eine Regenerierung des Behandlungsmittels verzichtet werden. Bei nicht regenerierbaren Behandlungsmitteln entfällt die Regenerierung ohnehin.

Das Verfahren und die Anlage gemäss der Erfindung ist nicht nur für die Stabilisierung von klaren Säften aus Früchten, Beeren und Gemüsen geeignet, sondern kann auch für andere, nachzubehandelnde Flüssigkeiten wie Wein, Bier und dgl., sowie für die Aufhellung von Flüssigkeiten verwendet werden.

## Patentansprüche

1. Verfahren zur Nachbehandlung von wenigstens teilweise geklärten Säften, insbesondere geklärter Säfte aus Früchten, Beeren oder Gemüsen, mittels Behandlungsmitteln zur Verhinderung von Nachtrübung und/oder zur Farbaufhellung, wobei der Saft in Kontakt mit dem Behandlungsmittel gebracht und das Behandlungsmittel durch einen Filter zurückgehalten wird, dadurch gekennzeichnet, dass das Gemisch aus Saft und Behandlungsmittel im Querstromfiltrationsverfahren gefiltert wird und dass die Querstromfiltration mittels Mikrofiltration oder Ultrafiltration erfolgt.

2. Verfahren nach Anspruch 1 oder 2, dadurch gekennzeichnet, dass der Saft während einer gewissen Verweilzeit in Kontakt mit dem Behandlungsmittel gehalten wird.

3. Verfahren nach Anspruch 3, dadurch gekennzeichnet, dass die Behandlungsintensität veränderbar ist.

4. Verfahren nach Anspruch 4, dadurch gekennzeichnet, dass die Behandlungsintensität in Abhängigkeit von der Zeit und/oder der behandelten Saftmenge steuerbar ist.

5. Verfahren nach Anspruch 4 oder 5, dadurch gekennzeichnet, dass die Behandlungsintensität gegeben durch Behandlungsdauer und/oder Behandlungsmittelkonzentration und/oder Turbulenz in einem Vorlauftank in Abhängigkeit vom Farbwert oder einer anderen von der Behandlung beeinflussten Messgrösse des nach der Querstromfiltration auf der Permeatseite austretenden Saftes steuerbar ist.

6. Verfahren nach einem der Ansprüche 4 bis 6, dadurch gekennzeichnet, dass die Behandlungsintensität durch eine allmähliche und/oder steuerbare Zugabe von Behandlungsmittel in den retentatseitigen Kreislauf veränderbar ist.

7. Verfahren nach einem der Ansprüche 1 bis 5, dadurch gekennzeichnet, dass nach dem Abschalten der Saftzufuhr und Zugabe von Wasser der retentatseitige Kreislauf im Diafiltrations- oder ähnlichen Verfahren durchgespült und aufkonzentriert wird, wobei zur Regenerierung des Behandlungsmittels dem retentatseitigen Kreislauf ein Regenerierungsmittel zugeführt wird.

8. Verfahren nach Anspruch 8, dadurch gekennzeichnet, dass nach dem Regenerieren des Behandlungsmittels der retentatseitige Kreislauf durch Zugabe von Spülwasser im Diafiltrations- oder ähnlichen Verfahren ausgewaschen wird.

9. Verfahren nach einem der Ansprüche 1 bis 9, dadurch gekennzeichnet, dass mindestens die Regenerierung des Behandlungsmittels ausserhalb und das Spülen und Waschen innerhalb oder ausserhalb des retentatseitigen Kreislaufs erfolgt.

10. Anlage zur Durchführung des Verfahrens nach einem der Ansprüche 1 bis 10, dadurch gekennzeichnet, dass der zu behandelnde Saft einen Vorlauftank (3) durchläuft, der über eine Zuführleitung (10) mit einer Querstromfiltrationseinrichtung (11) verbunden ist, von der aus eine Rückleitung (13) für das Retentat zum Vorlauftank (3) führt und das Permeat über eine Abflussleitung (17) abgeführt wird.

11. Anlage nach Anspruch 11, dadurch gekennzeichnet, dass die Filter der Querstromfiltrationseinrichtung (11) je nach Art des Behandlungsmittels aus Grobfiltrations-, Mikrofiltrations- oder Ultrafiltrationsmembranen bestehen.

12. Anlage nach Anspruch 11 oder 12, dadurch gekennzeichnet, dass von der Rückleitung (13) der Querstromfiltrationseinrichtung (11) eine Leitung (14) für das Retentat abgezweigt und in die Zuführleitung (10) zwischen Vorlauftank (3) und Umwälzpumpe (12) eingeleitet wird.

13. Anlage nach einem der Ansprüche 11 bis 13, dadurch gekennzeichnet, dass im Vorlauftank (3) ein Rührwerk (7) und/oder Stator-Einbauten oder Statisch-Mischelemente (9) vorgesehen sind.

14. Anlage nach einem der Ansprüche 11 bis 14, dadurch gekennzeichnet, dass der Vorlauftank (3) kolonnenförmig aufgebaut ist und Einspeisstellen (4) mit Absperrventilen (6) für die wahlweise Einleitung des Frischsaftes in den Vorlauftank (3) aufweist.

15. Anlage nach Anspruch 15, dadurch gekennzeichnet, dass in die Abflussleitung (17) der Querstromfiltrationseinrichtung (11) ein Regler (18) eingeschaltet ist, der die Frischsaftzufuhr in den Vorlauftank (3) und/oder die Rührerdrehzahl im Vorlauftank in Abhängigkeit vom Farbwert oder einer anderen von der Behandlung beeinflussten Messgrösse des Permeats steuert bzw. reguliert.

16. Anlage nach einem der Ansprüche 1 bis 16, dadurch gekennzeichnet, dass ausserhalb des retentatseitigen Kreislaufs ein Regenerierungstank (22) angeordnet ist, dem das Gemisch aus Wasser und dem Behandlungsmittel zur kompletten Regenerierung oder mindestens nach dem Spülen und Aufkonzentrieren vom retentatseitigen Kreislauf über eine Leitung (21) zugeführt und mit Chemikalien zur Regenerierung des Behandlungsmittels vermischt wird.

17. Anlage nach Anspruch 17, dadurch gekennzeichnet, dass das Gemisch aus Wasser, Behandlungsmittel und Regenerierungsmittel vom Regeneriertank (22) über eine Leitung (25) nach Abkühlung und Verdünnung und unter Zugabe von Spülwasser zur Querstromfiltrationseinrichtung (11) geführt, im Diafiltrations- oder ähnlichen Verfahren gewaschen und das regenerierte Behandlungsmittel über die Rückleitung (13) des retentatseitigen Kreislaufs in den Vorlauftank (3) zurückgeführt wird.

18. Anlage nach Anspruch 17 oder 18, dadurch gekennzeichnet, dass die Rückführung des regenerierten Behandlungsmittels von der Querstromfiltrationseinrichtung (11) über eine von der Rückleitung (13) abgezweigte Leitung (26) zum Regeneriertank (22) erfolgt.

19. Anlage nach Anspruch 19, dadurch gekennzeichnet, dass das regenerierte Behandlungsmittel vom Regeneriertank (22) über eine Leitung (27) zum Vorlauftank (3) und in den retentatseitigen Kreislauf zurückgeführt wird.

20. Anlage nach Anspruch 20, dadurch gekennzeichnet, dass in der Leitung (27) ein Regulierventil (28) angeordnet ist, das über eine Leitung (29) vom Farb- oder anderweitigem Regler (18) für eine von der behandlungsabhängigen Messgrösse regelbar ist.

## Claims

1. Process for the subsequent treatment of at least partially clarified juices, in particular clarified juices from fruits, berries or vegetables, by means of agents for preventing secondary haze and/or for brightening the colour, the juice being brought into contact with the agent and the agent being retained by a filter, characterised in that the mixture of juice and agent is filtered in a cross-flow filtration process and that the cross-flow filtration is effected by means of microfiltration or ultrafiltration.

2. Process according to claim 1, characterised in that the juice is kept in contact with the agent for a specific holding time.

3. Process according to claim 2, characterised in that the treatment intensity is variable.

4. Process according to claim 3, characterised in that the treatment intensity can be controlled in accordance with the time and/or the quantity of juice treated.

5. Process according to claim 3 or claim 4, characterised in that the treatment intensity given by the treatment duration and/or the agent concentration and/or the turbulence in a pre-run tank can be controlled in accordance with the colour value or another variable of the juice emerging at the permeate side after cross-flow filtration influenced by the treatment.

6. Process according to one of claims 3 to 5, characterised in that the treatment intensity can be varied by the gradual and/or controllable addition of agent into the circuit at the residue side.

7. Process according to one of claims 1 to 4, characterised in that after stopping the juice supply and the addition of water, the circuit at the residue side is washed thoroughly and concentrated in a diafiltration or similar process, a regenerant being supplied to the circuit at the residue side for regenerating the agent.

8. Process according to claim 7, characterised in that after the regeneration of the agent, the circuit at the residue side is washed by the addition of wash water in a diafiltration or similar process.

9. Process according to one of claims 1 to 8, characterised in that at least the regeneration of the agent is effected outside the circuit at the residue side and the rinsing and washing are effected inside or outside the circuit at the residue side.

10. Installation for carrying out the process according to one of claims 1 to 9, characterised in that the juice to be treated passes through a pre-run tank (3) which is connected via a supply line (10) to a cross-flow filtration apparatus (11), from which a return line (13) for the residue leads to the pre-run tank (3) and the permeate is discharged via a discharge line (17).

11. Installation according to claim 10, characterised in that the filter of the cross-flow filtration apparatus (11) consists of rough filtration, microfiltration or ultrafiltration membranes depending on the nature of the agent.

12. Installation according to claim 10 or claim 11, characterised in that a line (14) for the residue branches off from the return line (13) of the cross-flow filtration apparatus (11) and is fed into the supply line (10) between the pre-run tank (3) and the circulation pump (12).

13. Installation according to one of claims 10 to 12, characterised in that an agitator (7) and/or stator baffles or static mixing elements (9) are provided in the pre-run tank (3).

14. Installation according to one of claims 10 to 13, characterised in that the pre-run tank (3) is built in columns and has feed points (4) with stop valves (6) for the selective feed of fresh juice into the pre-run tank (3).

15. Installation according to claim 14, characterised in that a controller (18) is inserted into the discharge line (17) of the cross-flow filtration apparatus (11) and controls or regulates the fresh juice supply to the pre-run tank (3) and/or the agitator speed in the pre-run tank in accordance with the colour value or another variable of the permeate influenced by the treatment.

16. Installation according to one of claims 1 to 15, characterised in that a regeneration tank (22) is arranged outside the circuit at the residue side, to which the mixture of water and the agent is supplied via a line (21) for complete regeneration or at least after washing and concentration of the circuit at the residue side and is mixed with chemicals for regenerating the agent.

17. Installation according to claim 16, characterised in that the mixture of water, agent and regenerant is fed from the regeneration tank (22) via a line (25) after cooling and dilution and with the addition of wash water to the cross-flow filtration apparatus (11), and then is washed in a diafiltration or similar process and the regenerated agent is returned via the return line (13) of the circuit at the residue side to the pre-run tank (3).

18. Installation according to claim 16 or claim 17, characterised in that the return of the regenerated agent from the cross-flow filtration apparatus (11) to the regeneration tank (22) is effected via a line (26) branching off from the return line (13).

19. Installation according to claim 18, characterised in that the regenerated agent is returned from the regeneration tank (22) via a line (27) to the pre-run tank (3) and into the circuit at the residue side.

20. Installation according to claim 19, characterised in that a control valve (28) is arranged in the line (27) and can be controlled via a line (29) from the colour or other controller (18) for a variable dependent on the treatment.

## Revendications

1. Procédé de traitement ultérieur de jus au moins partiellement clarifiés, en particulier de jus clarifiés de fruits, baies ou légumes, au moyen de produits de traitement pour empêcher la turbidité subséquente et/ou l'éclaircissement de la teinte, selon lequel on amène le jus en contact avec le produit de traitement et on retient le produit de traitement par un filtre, caractérisé en ce que l'on filtre le mélange de jus et de produit de traitement selon le procédé de filtration à courant transversal et on effectue la filtration à courant transversal par microfiltration ou ultrafiltration.

2. Procédé selon la revendication 1, caractérisé en ce que l'on maintient le jus en contact avec le produit de traitement pendant un certain temps de séjour.

3. Procédé selon la revendication 2, caractérisé en ce que l'intensité de traitement est variable.

4. Procédé selon la revendication 3, caractérisé en ce que l'intensité de traitement est réglable en fonction du temps et/ou de la quantité de jus traitée.

5. Procédé selon la revendication 3 ou 4, caractérisé en ce que l'intensité de traitement, déterminée par la durée de traitement et/ou la concentration du produit de traitement et/ou la turbulence dans une cuve primaire, est réglable en fonction de la valeur chromatique ou d'une autre grandeur mesurée, influencée par le traitement, du jus sortant du côté du perméat après la filtration à courant transversal.

6. Procédé selon une des revendications 3 à 5, caractérisé en ce que l'intensité de traitement est variable par une addition progressive et/ou réglable de produit de traitement dans le circuit côté rétentat.

7. Procédé selon une des revendications 1 à 4, caractérisé en ce que, après l'arrêt de l'amenée de jus et l'addition d'eau, on effectue le rinçage du circuit côté rétentat et l'augmentation de la concentration selon un procédé de diafiltration ou un procédé analogue, avec amenée d'un produit de régénération au circuit côté rétentat en vue de la régénération du produit de traitement.

8. Procédé selon la revendication 7, caractérisé en ce que, après la régénération du produit de traitement, on lave le circuit côté rétentat par addition d'eau de rinçage selon un procédé de diafiltration ou un procédé analogue.

9. Procédé selon une des revendications 1 à 8, caractérisé en ce que l'on effectue au moins la régénération du produit de traitement à l'extérieur et l'on effectue le rinçage et le lavage à l'intérieur ou à l'extérieur du circuit côté rétentat.

10. Installation pour la mise en oeuvre du procédé selon une des revendications 1 à 9, caractérisée en ce que le jus à traiter traverse une cuve primaire (3) reliée par une conduite d'amenée (10) à un dispositif de filtration à courant transversal (11), d'où une conduite de retour (13) pour le rétentat mène à la cuve primaire (3) et d'où le perméat est évacué à travers une conduite de sortie (17).

11. Installation selon la revendication 10, caractérisée en ce que les filtres du dispositif de filtration à courant transversal (11) sont formés, suivant le type du produit de traitement, de membranes de filtration grossière, de microfiltration ou d'ultrafiltration.

12. Installation selon la revendication 10 ou 11, caractérisée en ce qu'une conduite (14) pour le rétentat est branchée en dérivation sur la conduite de retour (13) du dispositif de filtration à courant transversal (11) et débouche dans la conduite d'amenée (10) entre la cuve primaire (3) et une pompe de circulation (12).

13. Installation selon une des revendications 10 à 12, caractérisée en ce qu'un agitateur (7) et/ou des éléments statoriques incorporés ou des éléments mélangeurs statiques (9) sont prévus dans la cuve primaire (3).

14. Installation selon une des revendications 10 à 13, caractérisée en ce que la cuve primaire (3) est structurée en forme de colonne et présente des points d'alimentation (4) avec des vannes d'arrêt (6) pour l'introduction sélective du jus frais dans la cuve primaire (3).

15. Installation selon la revendication 14, caractérisée en ce qu'un régulateur (18) est interposé dans la conduite de sortie (17) du dispositif de filtration à courant transversal (11), régulateur qui assure le réglage ou la régulation de l'amenée de jus frais dans la cuve primaire (3) et/ou la vitesse de rotation de l'agitateur dans la cuve primaire en fonction de la valeur chromatique ou d'une autre grandeur mesurée du perméat, grandeur qui est influencée par le traitement.

16. Installation selon une des revendications 1 à 15, caractérisée en ce qu'une cuve de régénération (22) est placée à l'extérieur du circuit côté rétentat, a laquelle est amené, à travers une conduite (21), le mélange d'eau et de produit de traitement, en vue de la régénération complète ou au moins après le rinçage et l'augmentation de la concentration du circuit côté rétentat, et qu'il est mélangé avec des produits chimiques en vue de la régénération du produit de traitement.

17. Installation selon la revendication 16, caractérisée en ce que le mélange d'eau, produit de traitement et produit de régénération, amené depuis la cuve de régénération (22) à travers une conduite (25) au dispositif de filtration à courant transversal (11), après refroidissement et dilution et avec addition d'eau de rinçage, est lavé selon le procédé de diafiltration ou un procédé analogue, et le produit de traitement régénéré est ramené par la conduite de retour (13) du circuit côté rétentat dans la cuve primaire (3).

18. Installation selon la revendication 16 ou 17, caractérisée en ce que le retour du produit de traitement regénéré depuis le dispositif de filtration à courant transversal (11) s'effectue à travers une conduite (26) branchée en dérivation sur la conduite de retour (13) et menant à la cuve de régénération (22).

19. Installation selon la revendication 18, caractérisée en ce que le produit de traitement régénéré est ramené depuis la cuve de régénération (22) par une conduite (27) à la cuve primaire (3) et dans le circuit côté rétentat.

20. Installation selon la revendication 19, caractérisée en ce que la conduite (27) contient une vanne de régulation (28) réglable par une ligne (29) par un régulateur de couleur ou un autre régulateur (18) pour une grandeur mesurée fonction du traitement.
